(19) Europäisches Patentamt
European Patent Office
Office européen des brevets

(11) **EP 3 134 952 B1**

## (12) EUROPÄISCHE PATENTSCHRIFT

(45) Veröffentlichungstag und Bekanntmachung des Hinweises auf die Patenterteilung:
**07.12.2022 Patentblatt 2022/49**

(21) Anmeldenummer: **15708764.4**

(22) Anmeldetag: **25.02.2015**

(51) Internationale Patentklassifikation (IPC):
**B60L 53/12** (2019.01) **H02J 7/00** (2006.01)
**H02J 50/12** (2016.01)

(52) Gemeinsame Patentklassifikation (CPC):
**B60L 53/12; H02J 7/00302; H02J 50/12;**
Y02T 10/70; Y02T 10/7072; Y02T 90/12;
Y02T 90/14

(86) Internationale Anmeldenummer:
**PCT/EP2015/053875**

(87) Internationale Veröffentlichungsnummer:
**WO 2015/161944 (29.10.2015 Gazette 2015/43)**

(54) **ÜBERTRAGUNGSSYSTEM UND VERFAHREN ZUR INDUKTIVEN LADUNG EINE ELEKTRISCH ANGETRIEBENEN FAHRZEUGS UND FAHRZEUGANORDNUNG**

TRANSMISSION SYSTEM, METHOD FOR INDUCTIVELY CHARGING AN ELECTRICALLY DRIVEN VEHICLE, AND VEHICLE ASSEMBLY

SYSTÈME DE TRANSMISSION ET PROCÉDÉ DE CHARGE PAR INDUCTION D'UN VÉHICULE À PROPULSION ÉLECTRIQUE, ET ENSEMBLE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **25.04.2014 DE 102014207854**

(43) Veröffentlichungstag der Anmeldung:
**01.03.2017 Patentblatt 2017/09**

(73) Patentinhaber: **Robert Bosch GmbH**
**70442 Stuttgart (DE)**

(72) Erfinder:
• DIEKHANS, Tobias
70563 Stuttgart-Vaihingen (DE)
• BLUM, Oliver
74193 Schwaigern (DE)
• SCHUMANN, Philipp
70469 Stuttgart (DE)

(56) Entgegenhaltungen:
EP-A1- 2 479 059          EP-A1- 2 632 762
EP-A1- 2 868 516          WO-A1-2010/115867
DE-A1-102010 054 472      US-A1- 2011 254 377
US-B1- 6 301 128

**Beschreibung**

Die vorliegende Erfindung bezieht sich auf ein Übertragungssystem zum kontaktlosen Übertragen von Energie. Ferner bezieht sich die vorliegende Erfindung auf ein entsprechendes Verfahren und eine Fahrzeuganordnung.

Stand der Technik

Heute werden elektrische Energiespeicher in einer Vielzahl von Anwendungen eingesetzt. Insbesondere in mobilen Anwendungen werden z.B. Batterien als Energiespeicher eingesetzt.

Beispielsweise werden Batterien in Elektrofahrzeugen oder Hybridfahrzeugen als Energiespeicher eingesetzt, um Energie für den elektrischen Antriebsmotor des Elektrofahrzeugs oder Hybridfahrzeugs bereitzustellen.

Um eine Batterie als Energiespeicher in einem Fahrzeug einsetzen zu können, muss zusätzlich eine Möglichkeit zum Laden der Batterie bereitgestellt werden.

Heute ist es üblich, Hochvoltbatterien in einem Fahrzeug z.B. über einen galvanischen Anschluss an das öffentliche Stromnetz zu laden. Dazu kann z.B. in einer Garage eines Hauses ein Ladeadapter installiert werden, an welchen das jeweilige Fahrzeug über ein Kabel angeschlossen werden kann. Alternative befindet sich der Ladeadapter auf Fahrzeugseite und kann an eine herkömmliche Steckdose angeschlossen werden.

Die EP2623363 zeigt eine herkömmliche Ladeeinrichtung für Energiespeicher.

Ferner sind heute induktive Ladeanordnungen bekannt, bei welchen Energie von dem Ladeadapter an das Fahrzeug kabellos über eine induktive Kopplung zweier Spulen übertragen wird.

EP 2 479 059 A1 beschreibt ein Batterieladegerät für elektrisch Fahrzeuge mit mindestens drei identischen stromgesteuerten Gleichrichtermodulen.

US 6301128 B1 beschreibt ein kontaktloses Energieübertragungssystem mit einem eingangsseitigen Wechselrichter mit variabler Frequenz und einem ausgangsseitig geregelten Gleichrichter.

WO 2010/115867 A1 beschreibt eine bidirektionale und berührungsfreie Übertragung von Leistung zum Aufladen von Elektrofahrzeugen. Hierzu wird ein Wandler verwendet, der den elektrischen Antrieb des Elektrofahrzeugs speist.

US 2011/0254377 A1 beschreibt eine bidirektionale kabellose Energieübertragung für eine Elektrofahrzeug, insbesondere zwischen einem Ladepunkt und einer Batterie des Elektrofahrzeugs. Zur Leistungsregelung kann ein Gleichspannungswandler vorgesehen sein, der durch Variation des Spannungsniveaus den Leistungsfluss steuert..

EP 2 632 762 A1 beschreibt eine System zur kabellosen Energieübertragung mit einem parasitären Resonator.

Beim sogenannten induktiven Laden von Elektrofahrzeugen wird die für das Laden der Fahrzeugbatterie notwendige Energie nicht über ein Ladekabel zum Fahrzeug übertragen (konduktives Laden), sondern über einen Transformator mit großem Luftspalt kontaktlos übertragen. Hierbei ist typischerweise die Primärspule des Transformators entweder im Boden eingelassen oder als auf den Boden aufgelegte Ladeplatte ausgeformt und wird mittels einer geeigneten Elektronik mit dem Stromnetz verbunden. Die Sekundärspule des Transformators ist typischerweise fest im Unterboden des Fahrzeugs montiert und ihrerseits mittels geeigneter Elektronik mit der Fahrzeugbatterie verbunden. Zur Energieübertragung erzeugt die Primärspule ein hochfrequentes magnetisches Wechselfeld, das die Sekundärspule durchdringt und dort einen entsprechenden Strom induziert.

Da einerseits die übertragbare Leistung linear mit der Schaltfrequenz skaliert, andererseits die Schaltfrequenz durch die Ansteuerungselektronik, Verluste im Übertragungspfad und gesetzliche Grenzwerte bezüglich magnetischer Felder begrenzt ist, ergibt sich ein typischer Frequenzbereich von 10 -150 kHz.

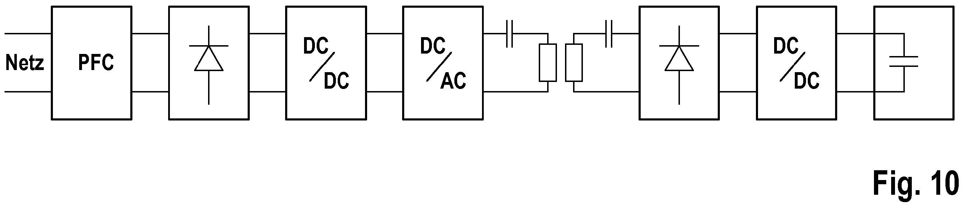

In Fig. 10 ist eine herkömmliche induktive Ladeanordnung gezeigt. Kernstück der Elektronik, die die Primärspule mit dem Stromnetz verbindet, ist ein mit hoher Schaltfrequenz betriebener Wechselrichter. Der Stromfluss ergibt sich typischerweise durch Anregung des durch die Primärspule und eine entsprechende Kompensationskapazität gebildeten Schwingkreises. Verschiedene Resonanzanordnungen mit zusätzlichen Resonanzelementen sind hierbei prinzipiell möglich.

Die resonante Last kann hierbei ausgenutzt werden, um den Wechselrichter im sogenannten Zero Voltage Switching Mode (ZVS) und/oder Zero Current Switching Mode (ZCS) zu betreiben. Bei diesem vollresonanten Betrieb entstehen nur geringe Schaltverluste in den zur Schaltung verwendeten Halbleiterbauelementen. Die Kombination der beiden Schwingkreise zuzüglich Wechselrichter und Gleichrichter kann für die Ladung einer Batterie mit festgelegtem Spannungsbereich und entsprechender Ladeleistung ausgelegt werden.

Wird als Resonanzanordnung beispielhaft die sogenannte Serien-Serien-Kompensation mit Serienschwingkreisen auf Primär- und Sekundärseite verwendet, so ergibt sich, dass der Primärspulenstrom von der Batteriespannung, nicht aber vom Ladestrom abhängt. Da die Leitungsverluste in den Spulen und im Wechselrichter einen wesentlichen Beitrag zu den Gesamtverlusten des Systems leisten, wird deutlich, dass diese Anordnung bei Teillastbetrieb, d.h. reduziertem Ladestrom, bezogen auf die Übertragungsleistung signifikant ansteigende Verluste und damit eine signifikant geringere Gesamteffizienz der Energieübertragung aufweist. Dieses Problem kann durch eine Reduktion der (in dem beschriebenen Aufbau durch die Batterie vorgegebenen) Sekundärspannung des Systems behoben werden. Ein geläufiger Ansatz ist der Einsatz eines zusätzlichen DC/DC-Wandlers bzw. Impedanzwandlers (aktiv oder passiv) auf Sekundärseite. Ein solcher Wandler auf Sekundärseite, d.h. im Fahrzeug, ist jedoch auf Grund von Gewichts- und Bauraumrestriktionen sowie auf Grund von Verlusten in Schaltelementen und/oder passiven Bauelementen unvorteilhaft.

## Offenbarung der Erfindung

Die vorliegende Erfindung offenbart ein Übertragungssystem, ein Verfahren und eine Fahrzeuganordnung mit den Merkmalen der unabhängigen Patentansprüche. Weitere vorteilhafte Ausführungsformen sind Gegenstand der anhängigen Patentansprüche.

## Vorteile der Erfindung

Die der vorliegenden Erfindung zu Grunde liegende Erkenntnis besteht darin, dass der Einsatz von zusätzlichen Impedanzwandlern einen zusätzlichen Aufwand bedeutet und den Gesamtwirkungsgrad reduziert.

Die der vorliegenden Erfindung zu Grunde liegende Idee besteht nun darin, dieser Erkenntnis Rechnung zu tragen und ein Übertragungssystem vorzusehen, bei welchem die Impedanzwandler, z.B. DC/DC-Wandler des Standes der Technik durch eine geeignete Schaltstrategie in der Wechselrichtereinrichtung und/oder der Gleichrichtereinrichtung ersetzt werden.

Demzufolge sieht die vorliegende Erfindung ein Übertragungssystem vor, bei welchem eine Wechselrichtereinrichtung und/oder eine Gleichrichtereinrichtung die Leistung in allen auslegungsrelevanten Betriebspunkten auch unter Beibehaltung des gewünschten ZVS- und/oder ZCS-Betriebsmodus (Zero Voltage Switching bzw. Zero Current Switching, weichschaltender Betrieb) regeln kann. Dabei wird unter einer Pulsmustermodulation verstanden, dass die Wechselrichtereinrichtung und/oder die Gleichrichtereinrichtung derart angesteuert werden, dass die Übertragungseinrichtung mit positiven und negativen pulsartigen Signalen, z.B. Rechtecksignalen, angesteuert wird. Die Pulsmustermodulation besteht darin, die Frequenz, Anzahl bzw. Reihenfolge dieser pulsartigen Signale zu steuern. Dies kann im Fall der Wechselrichtereinrichtung bedeuten, dass das Übertragungssystem statt mit einem monofrequenten Rechtecksignal mit einem Rechtecksignal einer Grundfrequenz mit ausgelassenen Halb- oder Vollwellen angesteuert wird. Im Fall der Gleichrichtereinrichtung bedeutet dies, dass nicht alle Halb- oder Vollwellen des von der Übertragungseinrichtung übertragenen Stromsignals gleichgerichtet und damit zum Verbraucher weitergeleitet werden, sondern über einen gesteuerten Kurzschluss des Gleichrichtereingangs einige Halb- oder Vollwellen ausgelassen werden und im sekundären Schwingkreis der Übertragungseinrichtung rezirkulieren.

Bei weichschaltenden Topologien, die insbesondere auch bei höherer Übertragungsleistung und höherer Übertragungsfrequenz eingesetzt werden können, werden die Halbleiter-Schalter nur bei sehr kleinem Strom, nahe am Nulldurchgang des periodischen Stromsignals, oder sehr kleiner Spannung, während die parallele Freilaufdiode den Strom führt, betätigt.

Wenn bei der Leistungsmodulation nur komplette Sinus-Halbwellen ausmaskiert werden, ist das sogenannte weiche Schalten im Unterschied zu anderen Modulationsarten auch bei Teillast weiterhin möglich. Durch das Auslassen von Halbwellen wird im zeitlichen Mittel eine geringere Spannung an der Übertragungseinrichtung angelegt, ohne dass die Spannung z.B. durch einen DC/DC-Wandler geregelt werden muss.

Die Erfindung legt somit einen Systementwurf vor, der einerseits minimalen Hardware-Aufwand darstellt, da keine zusätzlichen passiven und aktiven Elemente benötigt werden, und andererseits auch bei hohen Leistungen, Voll- und Teillastbetrieb einen optimalen Wirkungsgrad erreicht. Zudem können die Topologie und die Schaltstrategie bei hohen Frequenzen eingesetzt werden, was durch den weichschaltenden Betrieb ermöglicht wird.

Vorteilhafte Ausführungsformen und Weiterbildungen ergeben sich aus den Unteransprüchen sowie aus der Beschreibung unter Bezugnahme auf die Figuren.

In einer Ausführungsform entspricht die Grundfrequenz oder ein ganzzahliges Vielfaches der Grundfrequenz der Pulsmustermodulation der Resonanzfrequenz der Übertragungseinrichtung.

In einer Ausführungsform sind sowohl die Wechselrichtereinrichtung als auch die Gleichrichtereinrichtung dazu ausgebildet, die Leistung in allen auslegungsrelevanten Betriebspunkten zu regeln, wobei der gewünschte ZVS- und/oder ZCS-Betriebsmodus (Zero Voltage Switching bzw. Zero Current Switching mit weichschaltendem Betrieb) beibehalten wird. Werden sowohl die Wechselrichtereinrichtung als auch die Gleichrichtereinrichtung derart betrieben, dass sie beide zur Leistungsregelung beitragen, kann der Arbeitspunkt durch eine geeignete beidseitige Regelungsstrategie optimal eingestellt werden.

In einer weiteren Ausführungsform weist das Übertragungssystem eine Steuereinrichtung auf, welche mit der Wechselrichtereinrichtung und der Gleichrichtereinrichtung gekoppelt ist und für eine Vielzahl von Arbeitspunkten des Übertragungssystems für die Wechselrichtereinrichtung und/oder für die Gleichrichtereinrichtung jeweils ein Schaltmuster vorgegebener oder variabler Länge aufweist, wobei jede Stelle des Schaltmusters eine Halbwelle oder eine Vollwelle der jeweiligen elektrischen Spannung oder des jeweiligen elektrischen Stroms kennzeichnet, wobei die Steuereinrichtung ausgebildet ist, jeweils in Abhängigkeit eines der Schaltmuster die Wechselrichtereinrichtung und/oder die Gleichrichtereinrichtung zu steuern.

In einer weiteren Ausführungsform ist die Steuereinrichtung dazu ausgebildet, das Schalten der Wechselrichtereinrichtung und das Schalten der Gleichrichtereinrichtung zu synchronisieren. Werden die Schaltvorgänge der Wechselrichtereinrichtung und der Gleichrichtereinrichtung synchronisiert, kann die Schaltstrategie optimiert werden und der Wirkungsgrad verbessert werden und Blindströme im System dadurch verringert werden.

In einer Ausführungsform führt die Steuereinrichtung eine Betriebsstrategie aus, bei welcher die Gleichrichtereinrichtung im Fahrzeug und die Wechselrichtereinrichtung in der Ladestation ihr jeweiliges Maß der Leistungsmodulation so einstellen, dass unter Berücksichtigung der gegebenen Randbedingungen wie Kopplungsfaktor der Spulen und Batteriespannung sowie der gewünschten Übertragungsleistung ein im Hinblick auf Belastung der Bauelemente, magnetisches Streufeld, Wärmeabfuhr und Übertragungsverluste optimaler Betriebspunkt des Gesamtsystems erreicht wird.

Dazu kann die Steuereinrichtung in einer Ausführungsform gleiche Pulsmuster auf der Primär- und der Sekundärseite verwenden. Für diese Betriebsstrategie wäre keine zusätzliche Messtechnik (z.B. zur Ermittlung der Koppelinduktivität M) im Vergleich zur konventionellen einseitigen Regelung notwendig. Einzige Voraussetzung ist eine vorhandene Kommunikation zwischen Primär- und Sekundärseite. Die Regelgröße (z.B. der Batterieladestrom) muss in jedem Fall gemessen werden.

Eine zweite Betriebsstrategie hätte zum Ziel ein konstantes Stromverhältnis zwischen dem Strom auf der Primärseite und dem Strom auf der Sekundärseite durch ein geeignetes Pulsmuster auf Primär- und Sekundärseite einzuregeln. Es ergeben sich die gleichen Vorteile wie bei der vorherigen Betriebsstrategie. Darüber hinaus wird die tatsächliche Batteriespannung durch die Sekundärseite vom System entkoppelt, so dass sowohl auf Primär- als auch auf Sekundärseite die gleichen Ströme fließen wie im Nennpunkt, für den das System optimiert wurde. Es erfolgt demzufolge eine Impedanzanpassung durch die aktive Sekundärseite ohne die Notwendigkeit eines zusätzlichen DC/DC-Wandlers.

Eine dritte Betriebsstrategie sieht eine adaptive Arbeitspunktanpassung vor. Unter der Randbedingung, dass eine geforderte Leistung bei einem gegebenen Koppelfaktor und gegebener Batteriespannung übertragen werden soll, kann nun adaptiv ein optimaler Arbeitspunkt eingestellt werden. Dies wird ermöglicht über den zusätzlichen Freiheitsgrad, den die beidseitige Regelung bietet. In einer Ausführungsform ist beispielsweise eine Messung des tatsächlichen Wirkungsgrades und eine adaptive Einstellung des effizientesten Arbeitspunktes möglich. Dieser Vorgang kann aus regelungstechnischer Sicht sehr langsam ablaufen, da sich im Ladevorgang der Arbeitspunkt nur langsam ändert. Auch andere Optimierungsgrößen sind möglich, beispielsweise der Ladevorgang mit einem minimalen B-Feld im Luftspalt.

Schließlich kann eine vierte Betriebsstrategie verwendet werden, die eine aktive Sekundärseite zur Vergrößerung des Arbeitsbereichs des Gesamtsystems vorsieht. Erst wenn der Primärstrom einen festgelegten Maximalwert überschreitet, beispielsweise aufgrund eines schlechten Koppelfaktors, wird die Sekundärseite aktiv zur Impedanzanpassung verwendet, um das System weiter betreiben zu können ohne den maximalen Primärstrom zu überschreiten.

In einer weiteren Ausführungsform geschieht die Synchronisierung der Pulsmustermodulation der Wechselrichtereinrichtung und der Gleichrichtereinrichtung durch das Messen einer oder mehrerer elektrischer Größen, beispielsweise eines Stromes. So ist keine schnelle oder gar keine Kommunikation zur Synchronisierung der Wechselrichtereinrichtung und der Gleichrichtereinrichtung nötig.

In einer Ausführungsform ist die Steuereinrichtung dazu ausgebildet, die Wechselrichtereinrichtung und die Gleichrichtereinrichtung derart zu steuern, dass die Stromamplituden und Verluste auf beiden Seiten der Übertragungseinrichtung annähernd konstant bzw. an den Ohmschen Widerstand der Resonanzkreise angepasst sind.

In einer weiteren Ausführungsform sind die Zeitspannen der Ein- bzw. Abschaltung in der Wechselrichtereinrichtung und der Gleichrichtereinrichtung derart gewählt, dass die relativen Verluste bei der Energieübertragung minimiert werden.

In einer Ausführungsform ist die Steuereinrichtung aufgeteilt auf die Wechselrichtereinrichtung und die Gleichrichtereinrichtung. Eine Datenübertragung zur Synchronisierung kann zwischen beiden Teilen z.B. über eine Funkverbindung, eine kabelgebundene Verbindung oder dergleichen erfolgen. Alternativ weisen die Wechselrichtereinrichtung und die Gleichrichtereinrichtung jeweils eine Steuereinrichtung auf, welche die Synchronisation jeweils mit Hilfe einer Strom- und/oder Spannungsmessung durchführen.

In einer Ausführungsform weist die Wechselrichtereinrichtung eine Brückenschaltung auf. Dabei kann die Brückenschaltung eine Halbbrücke oder eine Vollbrücke aufweisen. Zusätzlich oder alternativ weist die Gleichrichtereinrichtung zwei negative Gleichrichterzweige mit jeweils einem zweiten Schaltelement mit einer zu dem jeweiligen zweiten Schaltelement antiparallel geschalteten zweiten Diode und zwei positive Gleichrichterzweige mit jeweils einer dritten Diode auf. Dadurch wird es möglich, bei geeigneter Ansteuerung der Schaltelemente sowohl den Schwingkreis auf der Eingangsseite der Übertragungseinrichtung als auch den Schwingkreis auf der Ausgangsseite der Übertragungseinrichtung zu schließen und von den weiteren Komponenten abzukoppeln. Dadurch kann der Energieeintrag in bzw. die Energieentnahme aus dem jeweiligen Schwingkreis unterbunden bzw. gesteuert werden.

Alternativ kann die Gleichrichtereinrichtung auch als Wechselrichtereinrichtung ausgebildet sein, welche insbesondere der erfindungsgemäßen Wechselrichtereinrichtung gleicht. Dadurch wird eine bidirektionale Energieübertragung ermöglicht.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Kurze Beschreibung der Zeichnungen

Die vorliegende Erfindung wird nachfolgend anhand der in den schematischen Figuren der Zeichnungen angegebenen Ausführungsbeispiele näher erläutert. Es zeigen dabei:

Fig. 1　　ein Blockschaltbild einer Ausführungsform eines erfindungsgemäßen Übertragungssystems;

Fig. 2　　ein Ablaufdiagramm einer Ausführungsform eines erfindungsgemäßen Verfahrens;

Fig. 3　　ein Blockschaltbild einer Ausführungsform einer erfindungsgemäßen Fahrzeuganordnung;

Fig. 4　　ein elektrisches Schaltbild einer Ausführungsform eines erfindungsgemäßen Übertragungssystems;

Fig. 5　　ein Diagramm zur Darstellung der Spannungen und Ströme in einer Ausführungsform eines erfindungsgemäßen Übertragungssystems;

Fig. 6　　ein weiteres Diagramm zur Darstellung der Spannungen und Ströme in einer Ausführungsform eines erfindungsgemäßen Übertragungssystems;

Fig. 7　　ein weiteres Diagramm zur Darstellung der Spannungen und Ströme in einer Ausführungsform eines erfindungsgemäßen Übertragungssystems;

Fig. 8　　ein weiteres Diagramm zur Darstellung der Spannungen und Ströme in einer Ausführungsform eines erfindungsgemäßen Übertragungssystems;

Fig. 9　　ein weiteres Diagramm zur Darstellung der Spannungen und Ströme in einer Ausführungsform eines erfindungsgemäßen Übertragungssystems; und

Fig. 10　　ein Blockschaltbild einer herkömmlichen Ladeanordnung.

In allen Figuren sind gleiche bzw. funktionsgleiche Elemente und Vorrichtungen - sofern nichts anderes angegeben ist - mit denselben Bezugzeichen versehen worden.

Ausführungsformen der Erfindung

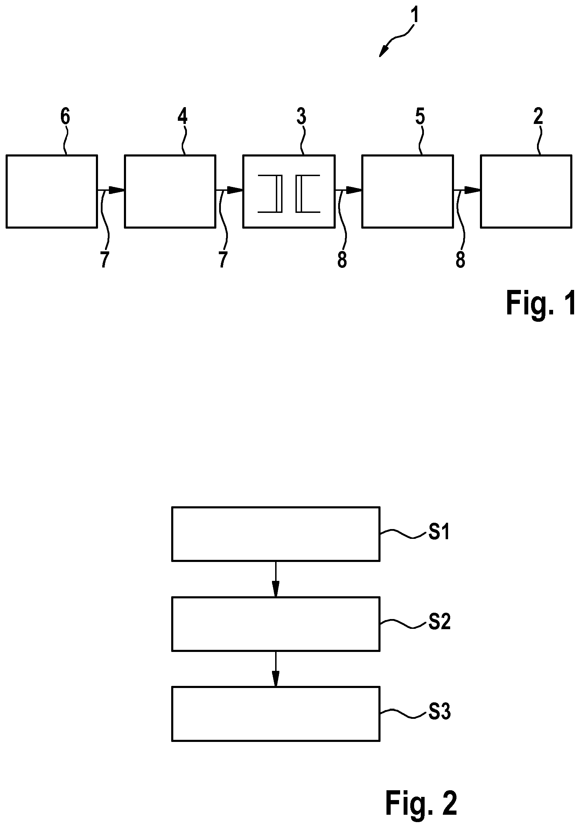

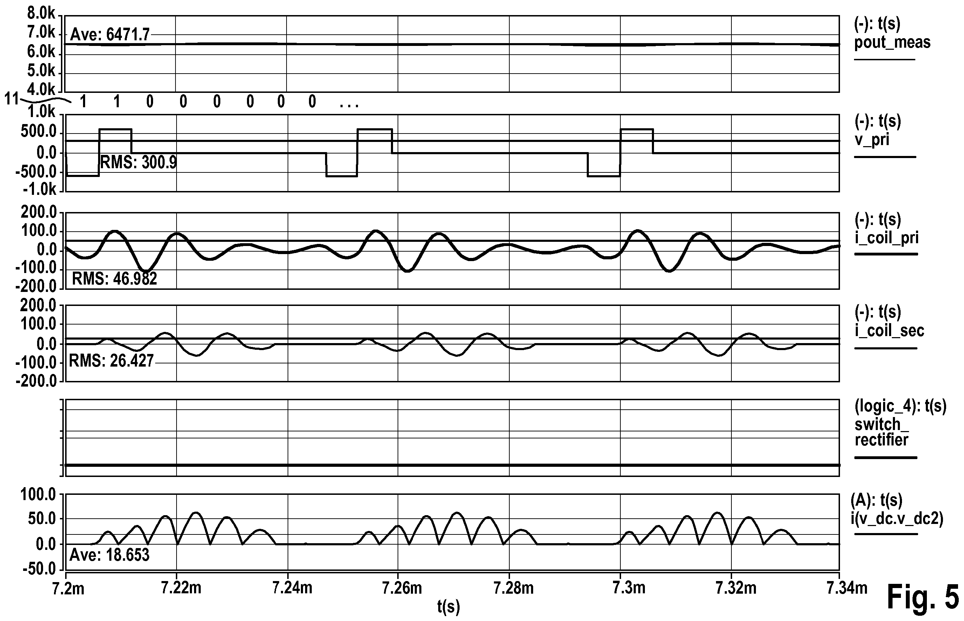

Fig. 1 zeigt ein Blockschaltbild einer Ausführungsform eines erfindungsgemäßen Ladesystems 1.
Das Übertragungssystem der Fig. 1 weist eine Energiequelle 6 auf, die mit einer Wechselrichtereinrichtung 4 gekoppelt ist. Die Wechselrichtereinrichtung 4 ist mit einer Übertragungseinrichtung 3 gekoppelt und die Übertragungseinrichtung 3 ist mit einer Gleichrichtereinrichtung 5 gekoppelt, die wiederum mit einem Verbraucher 2 gekoppelt ist. Der Verbraucher 2 kann in einer Ausführungsform z.B. als ein Energiespeicher 2, z.B. eine Batterie 2, ausgebildet sein. Der Verbraucher kann aber auch als jede andere Art von elektrischem Verbraucher ausgebildet sein.
Die Energiequelle stelle eine Versorgungsleistung 7 bereit, die die Wechselrichtereinrichtung 4 in eine Versorgungsleistung 7 für die Übertragungseinrichtung 3 wandelt. Die Versorgungsleistung 7 für die Übertragungseinrichtung 3 kann z.B. eine Wechselspannung bzw. einen Wechselstrom aufweisen.
Die Übertragungseinrichtung 3 kann elektrische Energie bzw. Leistung kontaktlos übertragen, dies ist lediglich beispielhaft in Fig. 1 als zwei Spulen dargestellt, die gegenüberliegend angeordnet sind. Ist die Übertragungseinrichtung 3 durch Spulen 3-1, 3-2 realisiert, weist jede Spule einen zusätzlichen Kondensator (nicht dargestellt) auf, der zusammen mit der jeweiligen Spule 3-1, 3-2 einen Schwingkreis bildet.
Für die Leistungsregelung in der Wechselrichtereinrichtung 4 wird eine Auslassung von Halb- oder Vollwellen in der Wechselrichtereinrichtung 4 genutzt. Hierdurch ergibt sich eine effektiv niedrigere Anregungsamplitude des primärseitigen Schwingkreises. In den Schwingungspausen wird die Wechselrichtereinrichtung 4 so eingestellt, dass sich ein Freilaufzustand ergibt, der ein Weiterschwingen des Schwingkreises erlaubt. Dies wird in Zusammenhang mit Fig. 5 näher erläutert.
Die Leistungsregelung durch die Gleichrichtereinrichtung 5 wird erfindungsgemäß durch die Einführung eines schaltbaren Freilaufzustandes in der Gleichrichtereinrichtung 5 durchgeführt. Auch hier ist es vorgesehen, dass eine oder mehrere Halb- oder Vollwellen ausgelassen bzw. ausmaskiert werden. Somit sieht die erfindungsgemäße Schaltstrategie auch hier vor, einen Freilaufzustand zum Kurzschließen des sekundärseitigen Schwingkreises über mindestens eine Halbwelle des Stromsignals zu aktivieren. Während des Kurzschlusses des sekundärseitigen Schwingkreises fließt damit kein Strom in die Batterie. Als Folge "sieht" die Schaltung vor der Gleichrichtereinrichtung eine effektiv niedrigere Batteriespannung, was zu einem deutlich kleineren Stromfluss in der Spule auf der Seite der Energiequelle und damit zu reduzierten Verlusten führt.

Durch eine Kombination der Pulsmustermodulation der Leistung in der Wechselrichtereinrichtung 4 und der Gleichrichtereinrichtung 5 kann so jeder beliebige Arbeitspunkt für das Übertragungssystem 1 eingestellt werden.

Es wird mit Hilfe der vorliegenden Erfindung nicht nur möglich, Bauteile in dem Übertragungssystem 1 einzusparen. Vielmehr kann das Übertragungssystem 1 auch im Teillastbetrieb mit hoher Effizienz betrieben werden.

Fig. 2 zeigt ein Ablaufdiagramm einer Ausführungsform eines erfindungsgemäßen Verfahrens.

Das Verfahren sieht in einem ersten Schritt S1 das zyklische Schalten einer elektrischen Versorgungsleistung 7 einer Energiequelle 6 an eine Übertragungseinrichtung 3 vor, welche zur kontaktlosen Übertragung elektrischer Energie ausgebildet ist.

In einem zweiten Schritt wird die elektrische Energie kontaktlos übertragen, z.B. von einer Sendespule bzw. Primärspule 3-1 einer Übertragungseinrichtung 3 an eine in einem Fahrzeug angebrachte Empfängerspule bzw. Sekundärspule 3-2 der Übertragungseinrichtung 3.

In einem dritten Schritt S3 wird die von der Übertragungseinrichtung 3 bereitgestellte Leistung 8 zyklisch an den Verbraucher 2 geschaltet bzw. weitergeleitet.

Dabei werden die Schaltvorgänge bei mindestens einem der Schritte des zyklischen Schaltens S1, S3 in Pulsmustern moduliert. Alternativ kann auch in beiden Schritten des zyklischen Schaltens S1 und S3 Pulsmustermodulation durchgeführt werden.

Zusätzlich können in einer Ausführungsform die Schritte des zyklischen Schaltens synchronisiert werden.

Schließlich kann in einer Ausführungsform für eine Vielzahl von Arbeitspunkten des Übertragungsverfahrens jeweils ein Schaltmuster 11 vorgegebener oder variabler Länge für die zyklischen Schaltvorgänge vorgegeben werden.

Dabei können für die Schaltvorgänge in der Wechselrichtereinrichtung 4 und in der Gleichrichtereinrichtung 5 jeweils eigene Schaltmuster vorgegeben werden.

Die Stellen des Schaltmusters 11 kennzeichnen jeweils eine Halbwelle oder eine Vollwelle der jeweiligen elektrischen Spannung oder des jeweiligen Stroms auf dessen Basis geschaltet wird.

Basierend auf den Schaltmustern 11 können daraufhin die Leistungen in der Wechselrichtereinrichtung 4 und in der Gleichrichtereinrichtung 5 geschaltet werden, um einen gewünschten Arbeitspunkt beim Laden einzustellen.

Das erfindungsgemäße Verfahren kann unterschiedliche Strategien umsetzen. In einer Ausführungsform wird eine Betriebsstrategie genutzt, bei welcher die Gleichrichtereinrichtung und die Wechselrichtereinrichtung ihr jeweiliges Maß der Leistungsmodulation so einstellen, dass unter Berücksichtigung der gegebenen Randbedingungen wie Kopplungsfaktor der Spulen und Batteriespannung sowie der gewünschten Übertragungsleistung ein im Hinblick auf Belastung der Bauelemente, magnetisches Streufeld, Wärmeabfuhr und Übertragungsverluste optimaler Betriebspunkt des Gesamtsystems erreicht wird.

Dazu können in einer Ausführungsform gleiche Pulsmuster auf der Primär- und der Sekundärseite verwendet werden. Für diese Betriebsstrategie wäre keine zusätzliche Messtechnik (z.B. zur Ermittlung der Koppelinduktivität M) im Vergleich zur konventionellen einseitigen Regelung notwendig. Einzige Voraussetzung ist eine vorhandene Kommunikation zwischen Primär- und Sekundärseite. Die Regelgröße (z.B. der Batterieladestrom) muss in jedem Fall gemessen werden.

Eine zweite Betriebsstrategie hätte zum Ziel, ein konstantes Stromverhältnis zwischen dem Strom auf der Primärseite und dem Strom auf der Sekundärseite durch ein geeignetes Pulsmuster auf Primär- und Sekundärseite einzuregeln. Es ergeben sich die gleichen Vorteile wie bei der vorherigen Betriebsstrategie. Darüber hinaus wird die tatsächliche Batteriespannung durch die Sekundärseite vom System entkoppelt, so dass sowohl auf Primär- als auch auf Sekundärseite die gleichen Ströme fließen wie im Nennpunkt, für den das System optimiert wurde. Es erfolgt demzufolge eine Impedanzanpassung durch die aktive Sekundärseite ohne die Notwendigkeit eines zusätzlichen DC/DC-Wandlers.

Eine dritte Betriebsstrategie sieht eine adaptive Arbeitspunktanpassung vor. Unter der Randbedingung, dass eine geforderte Leistung bei einem gegebenen Koppelfaktor und gegebener Batteriespannung übertragen werden soll, kann nun adaptiv ein optimaler Arbeitspunkt eingestellt werden. Dies wird ermöglicht über den zusätzlichen Freiheitsgrad, den die beidseitige Regelung bietet. In einer Ausführungsform ist beispielsweise eine Messung des tatsächlichen Wirkungsgrades und eine adaptive Einstellung des effizientesten Arbeitspunktes möglich. Dieser Vorgang kann aus regelungstechnischer Sicht sehr langsam ablaufen, da sich im Ladevorgang der Arbeitspunkt nur langsam ändert. Auch andere Optimierungsgrößen sind möglich, beispielsweise der Ladevorgang mit einem minimalen B-Feld im Luftspalt.

Schließlich kann eine vierte Betriebsstrategie verwendet werden, die eine aktive Sekundärseite zur Vergrößerung des Arbeitsbereichs des Gesamtsystems vorsieht. Erst wenn der Primärstrom einen festgelegten Maximalwert überschreitet, beispielsweise aufgrund eines schlechten Koppelfaktors, wird die Sekundärseite aktiv zur Impedanzanpassung verwendet, um das System weiter betreiben zu können ohne den maximalen Primärstrom zu überschreiten.

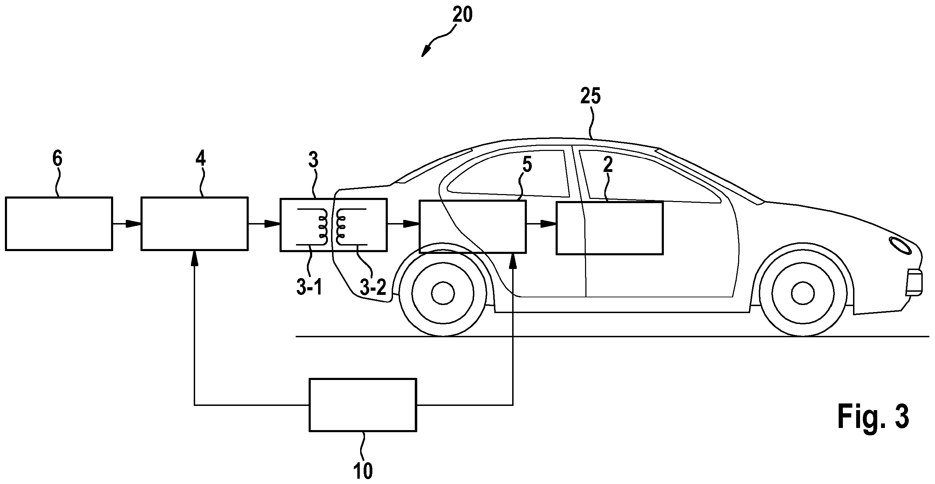

Fig. 3 zeigt ein Blockschaltbild einer Ausführungsform einer erfindungsgemäßen Fahrzeuganordnung 20.

In der Fahrzeuganordnung 20 ist ein Fahrzeug 25 dargestellt, wobei innerhalb des Fahrzeugs 25 die Empfängerspule 3-2 der Übertragungseinrichtung 3, die Gleichrichtereinrichtung 5 und der als Energiespeicher 2 ausgebildete Verbraucher 2, z.B. eine Fahrzeugbatterie 2, angeordnet sind.

Außerhalb des Fahrzeugs 25 sind die Energiequelle 6, die Wechselrichtereinrichtung 4 und die Primärspule 3-1 der Übertragungseinrichtung 3 angeordnet.

Schließlich ist eine Steuereinrichtung 10 vorgesehen, die mit der Wechselrichtereinrichtung 4 und der Gleichrichtereinrichtung 5 gekoppelt ist, um diese zu steuern.

Die Steuereinrichtung 10 kann ausgebildet sein, ein Verfahren gemäß Fig. 2 auszuführen. Die Steuereinrichtung 10 kann dabei als einzelnes Steuergerät 10 ausgebildet sein. Alternativ kann die Steuereinrichtung 10 auch als verteiltes Steuersystem 10 ausgebildet sein, welches zum Teil in der Wechselrichtereinrichtung 4 und zum Teil in der Gleichrichtereinrichtung 5 angeordnet sein kann. Dabei können die Teile der Steuereinrichtung Daten zur Synchronisation z.B. per Funk austauschen. Alternativ können die Teile der Steuereinrichtung 10 die Synchronisation auch basierend auf einer Strom bzw. Spannungsmessung durchführen.

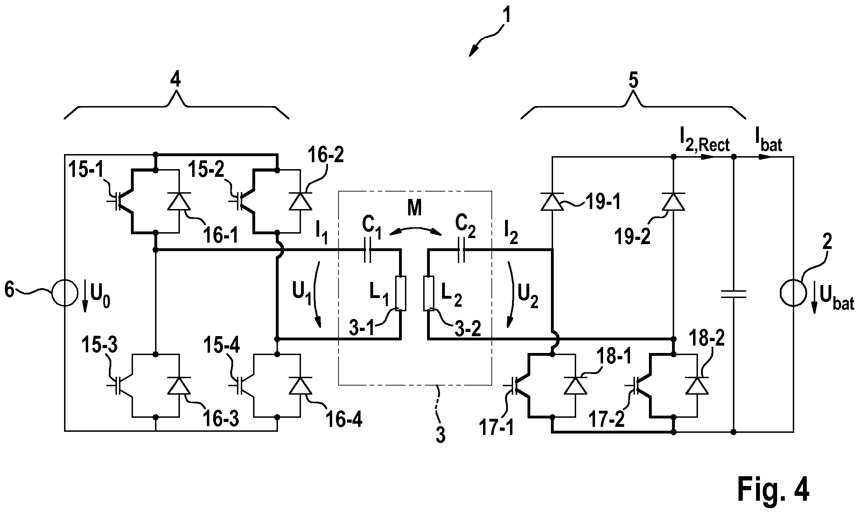

Fig. 4 zeigt ein elektrisches Schaltbild einer beispielhaften Ausführungsform eines erfindungsgemäßen Übertragungssystems 1.

Das Übertragungssystem in Fig. 4 weist eine Energiequelle 6 auf, die eine Versorgungsspannung $U_0$ bereitstellt. Die Wechselrichtereinrichtung 4 weist 4 Zweige auf, wobei zwei Zweige mit dem positiven Pol der Energiequelle 6 und zwei Zweige mit dem negativen Pol der Energiequelle 6 gekoppelt sind. Jeweils ein Zweig, der mit dem positiven Pol gekoppelt ist, und ein Zweig, der mit dem negativen Pol gekoppelt ist, ist mit einem ersten Pol einer Sendespule 3-1 der Übertragungseinrichtung 3 gekoppelt, die eine Induktivität L1 aufweist. Die verbleibenden Zweige sind mit einem zweiten Pol der Sendespule 3-1 der Übertragungseinrichtung 3 gekoppelt. Jeder Zweig weist eine erste Schalteinrichtung 15-1 - 15-4 und eine mit der jeweiligen ersten Schalteinrichtung 15-1 - 15-4 antiparallel geschaltete erste Diode 16-1 - 16-4 auf. Zwischen der Wechselrichtereinrichtung 4 und der Sendespule 3-1 ist ferner ein Kondensator C1 angeordnet, der mit der Spule 3-1 einen Schwingkreis bildet.

Die Empfängerspule 3-2 der Übertragungseinrichtung 3 ist mit der Gleichrichtereinrichtung 5 gekoppelt. Die Gleichrichtereinrichtung 5 weist zwei Zweige auf, die jeweils einen der Pole der Empfängerspule 3-2 mit dem negativen Pol des Energiespeichers 2 koppeln. Jeder dieser Zweige weist eine zweite Schaltvorrichtung 17-1 - 17-2 mit jeweils einer antiparallel angeordneten zweiten Diode 18-1, 18-2 auf. Die Gleichrichtereinrichtung 5 weist ferner zwei Zweige auf, die jeweils einen der der Pole der Empfängerspule 3-2 mit dem, positiven Pol des Energiespeichers 2 koppeln. Jeder dieser Zweige weist eine dritte Diode 19-1, 19-2 auf. Zwischen der Gleichrichtereinrichtung 5 und der Empfängerspule 3-2 ist ferner ein Kondensator C2 angeordnet, der mit der Spule 3-2 einen Schwingkreis bildet.

In Fig. 4 stellt die Energiequelle die Spannung $U_0$ bereit. An dem Schwingkreis der Sendespule 3-1 liegt die Spannung $U_1$ an. In dem Schwingkreis der Sendespule 3-1 fließt der Strom $I_1$. An dem Schwingkreis der Empfängerspule 3-2 liegt die Spannung $U_2$ an. In dem Schwingkreis der Empfängerspule 3-2 fließt der Strom $I_2$. Der Energiespeicher 2 weist die Spannung $U_{bat}$ auf.

Das grundlegende Betriebsverhalten des induktiven Übertragungssystems lässt sich mit der Grundwellenanalyse bestimmen, bei der die Oberwellen des rechteckförmigen Spannungssignals vernachlässigt werden. Nach der Grundwellenanalyse errechnet sich die übertragene Leistung bei der Resonanzfrequenz $\omega$ = $\omega_0$ in der beispielhaften Ausführungsform nach Fig. 4 gemäß der folgenden Formel

$$P = \frac{U_1 U_2}{\omega M}$$

Es ist zu erkennen, dass diese Leistung durch drei Faktoren beeinflusst werden kann. Einerseits kann die sekundärseitige Spannung $U_2$ variiert werden. Ferner kann die primärseitige Spannung $U_1$ variiert werden. Schließlich kann der Koppelfaktor k zwischen der Primärspule 3-1 und der Sekundärspule 3-2 verändert werden und damit die Koppelinduktivität M. Dabei sind üblicherweise der Koppelfaktor und die Batteriespannung durch die Gegebenheiten in dem Übertragungssystem, z.B. durch ein Fahrzeug, vorgegeben bzw. können nicht explizit eingestellt werden.

Durch eine zyklische Ansteuerung der ersten und zweiten Schaltelemente 15-1 - 15-4 und 17-1 - 17-2 können die Spannungen $U_1$ und $U_2$ gezielt beeinflusst werden. Dadurch wird es möglich, jeden beliebigen Arbeitspunkt in dem Übertragungssystem 1 einzustellen.

In Fig. 4 sind durch dick gezeichnete Verbindungsleitungen die Strompfade gezeigt, mit denen der Schwingkreis der Primärspule 3-1 und der Schwingkreis der Sekundärspule 3-2 jeweils geschlossen bzw. von der Energiequelle 6 oder dem Energiespeicher 2 getrennt werden können.

Der Pfad des Schwingkreises der Primärspule 3-1 läuft von einem ersten Pol der Primärspule 3-1 über den Kondensator C1 zu dem Schaltelement 15-1 über die positive Versorgungsleitung zu dem Schaltelement 15-2 und von diesem zu dem zweiten Pol der Primärspule 3-1. Werden Halb- oder Vollwellen aus der Versorgungsspannung des Schwingkreises der Primärspule 3-1 durch weiches Schalten entfernt bzw. ausmaskiert, ergibt sich eine effektiv niedrigere Anregungsamplitude des Schwingkreises der Primärspule 3-1.

Der Pfad des Schwingkreises der Sekundärspule 3-2 läuft von einem ersten Pol der Sekundärspule 3-2 über den Kondensator C2 zu dem Schaltelement 17-1 über die negative Versorgungsleitung zu dem Schaltelement 17-2 und von diesem zu dem zweiten Pol der Sekundärspule 3-2. Auch hier ist es vorgesehen, die Anzahl der Halb- oder Vollwellen zu modulieren. Somit sieht die erfindungsgemäße Schaltstrategie auch hier vor, einen Freilaufzustand zum Kurzschließen des sekundärseitigen Schwingkreises über mindestens eine Halbwelle des Stromsignals zu aktivieren. Während des Kurzschlusses des sekundärseitigen Schwingkreises fließt damit kein Strom in den Energiespeicher. Als Folge "sieht" die Schaltung vor dem Gleichrichter eine effektiv niedrigere Spannung $U_2$, was zu einem kleineren Stromfluss im Primärkreis führt.

In Fig. 4 ist die Energiequelle 6 als Gleichspannungsenergiequelle 6 dargestellt. In weiteren Ausführungsformen kann die Energiequelle 6 auch als eine Wechselspannungsenergiequelle mit einem zusätzlichen Gleichrichter oder dergleichen ausgebildet sein. Beispielsweise kann die Energiequelle 6 auch ein elektrisches Versorgungsnetzwerk eines öffentlichen Energieversorgers sein.

In den Diagrammen der Figs. 5 - 9 werden Spannungen und Ströme in einer Ausführungsform des erfindungsgemäßen Übertragungssystems 1 nach Fig. 4 gezeigt. Die Diagramme weisen jeweils sechs übereinander dargestellte Kurven auf. Die erste Kurve kennzeichnet den Verlauf der Ausgangsleistung des Übertragungssystems 1. Die zweite Kurve kennzeichnet die Spannung $U_1$ in Fig. 4. Die dritte Kurve kennzeichnet den Strom in der Primärspule 3-1, die vierte Kurve kennzeichnet den Strom in der Sekundärspule 3-2. Die fünfte Kurve kennzeichnet die Schalterstellung der Gleichrichtereinrichtung 5.

Schließlich kennzeichnet die sechste Kurve den Verlauf des Ladestroms an dem Energiespeicher 2.

In Fig. 5 ist zwischen der ersten und der zweiten Kurve ferner ein Schaltmuster 11 dargestellt, welches angibt, wann die Wechselrichtereinrichtung ihre Funktion ausführt und die Spannung der Energiequelle 6 wechselrichtet und wann nicht. Dabei weist das Schaltmuster 11 einen Wert für jede Halbwelle der wechselgerichteten Spannung der zweiten Kurve auf. Das Schaltmuster 11 der Fig. 5 weist acht Stellen auf und wird drei Mal wiederholt. Das Schaltmuster 11 lautet "11000000" Es wird also eine Vollwelle bzw. eine Periode der Spannung $U_1$ an die Übertragungseinrichtung 3 übertragen und weitere drei Perioden ausgelassen. Dies entspricht einem Tastverhältnis von ¼.

In der dritten Kurve ist zu sehen, dass der Strom in der Primärspule 3-1 mit jeder übertragenen Vollwelle einen Einschwingvorgang ausführt, der bis zur vierten Periode nahezu abgeklungen ist. Daraufhin wird erneut eine Vollwelle bzw. eine Periode der Spannung $U_1$ an die Übertragungseinrichtung 3 übermittelt und der Einschwingvorgang beginnt erneut. Die Amplitude des Strom beträgt dabei im Maximum bei diesem Beispiel ca. 100A.

Auf der Seite der Primärspule 3-1 wird durch das Auslassen der Perioden eine Leistungsregelung möglich. Dabei wird der im Mittel der Primärspule 3-1 zugeführte Strom gesteuert.

In der vierten Kurve ist zu sehen, dass der Strom in der Sekundärspule 3-2 dem Stromverlauf des Stroms in der zweiten Kurve folgt. Allerdings liegt dessen maximale Amplitude etwas tiefer, bei ca. 50A. Die Amplitude des Stroms in der Sekundärspule wird durch den Koppelfaktor zwischen den zwei Spulen 3-1, 3-2 bestimmt.

In der fünften Kurve ist zu sehen, dass bei der Anordnung der Fig. 5 auf der Sekundärseite keine Auslassung bzw. Austastung stattgefunden hat. Dies wird auch in der sechsten Kurve deutlich, in der zu sehen ist, welcher Strom dem Energiespeicher 2 zugeführt wird. Dieser entspricht exakt dem gleichgerichteten Strom der vierten Kurve.

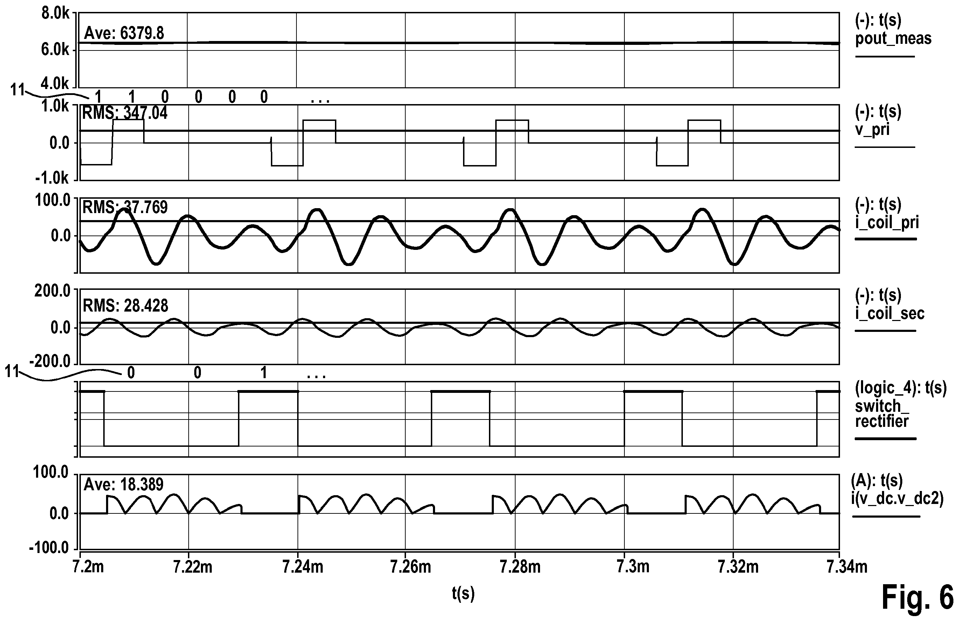

In Fig. 6 ähnelt der Verlauf der ersten und zweiten Kurven dem Verlauf der ersten und zweiten Kurven der Fig. 5, allerdings zeigt die erste Kurve eine mittlere Leistung von 6,38 kW an und das Schaltmuster der zweiten Kurve lautet "110000". Der Gleichrichter wurde ca. 30% seiner Zeit in den Freilaufzustand geschaltet. Die Wechselrichtereinrichtung wird in Fig. 6 also statt wie in Fig. 5 1/4 jetzt in Fig. 6 1/3 Vollwellen an die Übertragungseinrichtung 2 übertragen, um ungefähr auf die gleiche Gesamtleistung wie im vorigen Beispiel zu kommen.

Der Verlauf des Stroms in der dritten Kurve gleicht vom Verlauf her demjenigen der Fig. 5, allerdings liegt dessen maximale Amplitude bei ca. 75A. Auch der Verlauf des Stroms in der vierten Kurve folgt erneut dem Verlauf des Stroms der dritten Kurve.

In der fünften Kurve ist zu sehen, dass jeweils in etwa für die Dauer einer Periode der Spannung $U_1$ bis zur Mitte einer Periode der Spannung $U_1$ eine Austastung auf der Sekundärseite stattfindet. Der Schwingkreis auf Sekundärseite wird also geschlossen und keine Energie entnommen. Dies ist daran zu erkennen, dass die Amplitude des Stroms in dem Sekundärschwingkreis weniger stark abnimmt, als in Fig. 5. Das entsprechende Schaltmuster 11 für den Sekundärschwingkreis lautet "001".

Die sechste Kurve zeigt, dass während den Austastungen keine Übertragung von Strom an den Energiespeicher 2 erfolgt.

Während durch die Schaltmuster 11 der Fig. 6 der Strom in der Sekundärspule 3-1 nahezu gleichgeblieben ist, wurde der Primärspulenstrom um 20% reduziert. Dies entspricht einer Reduktion der Primärspulenverluste um 35%.

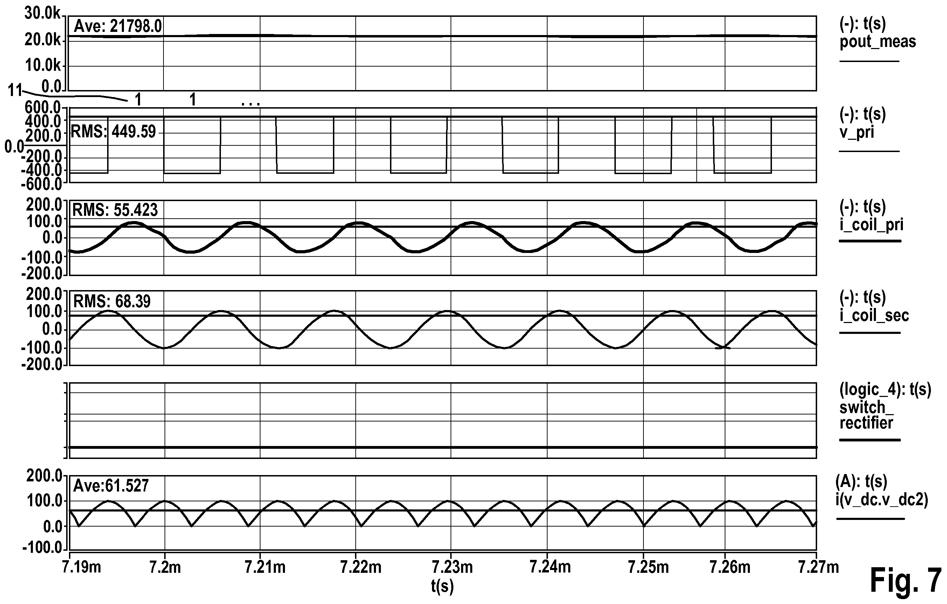

Fig. 7 zeigt ein Schaltmuster 11, bei welchem jede Vollwelle der Spannung U1 übertragen wird. Das Schaltmuster könnte also z.B. "11" lauten und ständig wiederholt werden. In der fünften Kurve der Fig. 7 ist ferner zu sehen, dass auf Sekundärseite keine Austastung stattfindet. Die Fig. 7 zeigt das Verhalten des Übertragungssystems 1 bei maximaler Kopplung und maximaler Ladeleistung.

Da keine Austastung auf Primärseite stattfindet, verläuft der Strom in der Primärspule 3-1 in einem sinusförmigen periodischen Verlauf. Auf Grund der maximalen Kopplung verläuft der Strom in der Sekundärspule 3-2 ebenfalls in einem sinusförmigen periodischen Verlauf. Beide Ströme haben eine Amplitude von etwa 100A. Die sechste Kurve zeigt, eine kontinuierliche Übertragung des gleichgerichteten Stroms der vierten Kurve an den Energiespeicher 2.

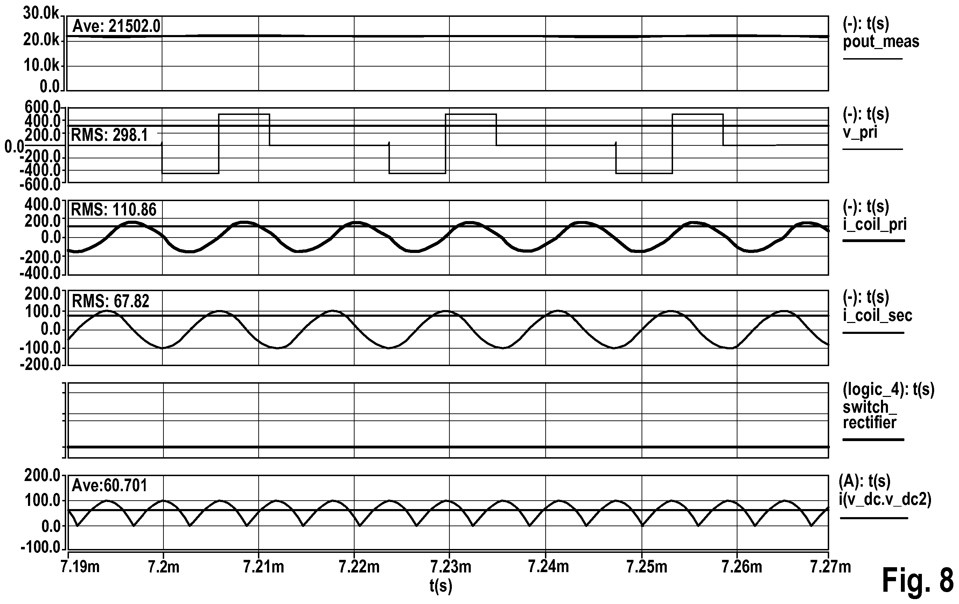

Fig. 8 zeigt nun eine Schaltstrategie, bei welcher in dem Übertragungssystem 1 annähernd die gleiche Leistung übertragen werden kann, wie in Fig. 7. Allerding beträgt der Koppelfaktor dabei nur etwa 50% von dem maximalen Koppelfaktor der Fig. 7.

Bei halbem Kopplungskoeffizient muss, um die volle Leistung zu erreichen, die Spannungsamplitude der wechselgerichteten Spannung $U_1$ halbiert und der Strom in der Primärspule 3-1 verdoppelt werden. Dazu wird jede zweite Vollwelle im Wechselrichter ausgelassen. Ein entsprechendes Schaltmuster 11 kann z.B. "0011" lauten.

Entsprechend zeigt die zweite Kurve, dass lediglich jede zweite Vollwelle der Spannung $U_1$ an die Übertragungseinrichtung 2 übertragen wird. Dies führt zu einer Verdoppelung des Stroms in der Primärspule 3-1 auf ca. 200A. Die Amplitude des Stroms in der Sekundärspule 3-2 bleibt aber, wie in Fig. 7, bei 100A. Somit wird auf der Sekundärseite in etwa die gleiche Ladeleistung erzielt, wie in Fig. 7.

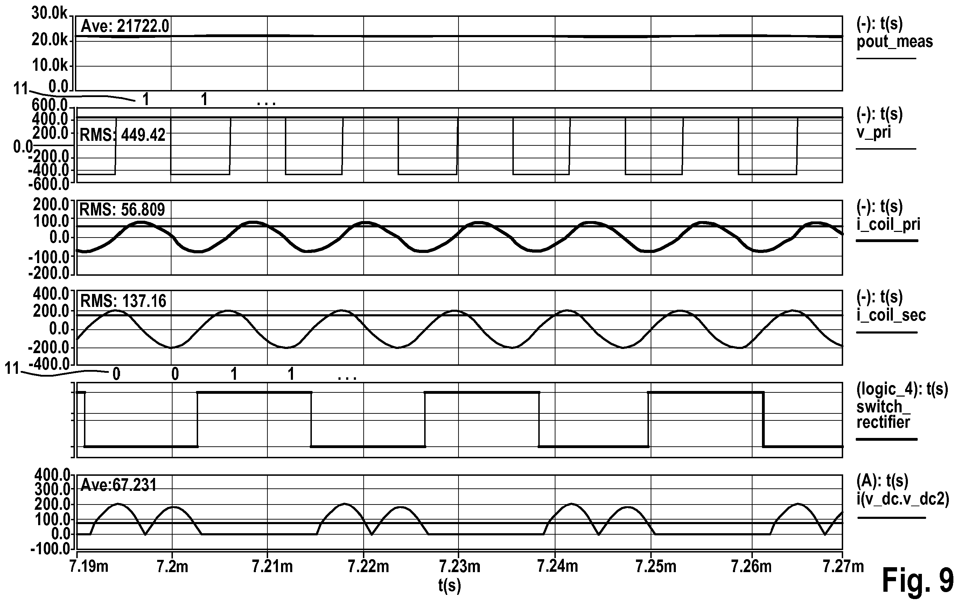

Fig. 9 zeigt eine alternative Schaltstrategie zu der Schaltstrategie der Fig. 8, mit welcher bei gleichen Rahmenbedingungen eine annähernd gleiche Leistung übertragen werden kann.

Eine annähernd gleiche Ladeleistung, wie nach der Schaltstrategie der Fig. 8 kann auch dadurch erzielt werden, dass die Wechselrichtereinrichtung 4 ohne Freilauf geschaltet wird, dafür aber in der Gleichrichtereinrichtung 5 50% der Zeit eine Austastung stattfindet. Dementsprechend ergibt sich eine Reduktion des Primärspulenstroms auf den bei maximaler Kopplung erreichten Wert, während der Sekundärspulenstrom auf den doppelten Wert ansteigt, da dieser nur die Hälfte der Zeit für die Batterie wirksam wird.

Dementsprechend zeigt die Schaltstrategie der Fig. 9, dass keine Austastung stattfindet, also ein Schaltmuster 11 z.B. "11" lautet. Demgegenüber ist das Schaltmuster 11 für die Sekundärspule 3-2 derart angelegt, dass jede zweite Vollwelle ausgetastet wird. Das Schaltmuster 11 kann z.B. "0011" lauten.

Zu erkennen ist, dass jede zweite Vollwelle des Stroms in der Sekundärspule 3-2 an den Energiespeicher 2 übertragen wird.

In den Figs. 5 - 9 wurden Schaltstrategien für vorgegebene Arbeitspunkte gezeigt. In weiteren Ausführungsformen können weitere Schaltstrategien z.B. aus Kombinationen der oben gezeigten Schaltstrategien bestehen. Beispielsweise kann das Austasten von Halb- bzw.- Vollwellen der Spannung $U_1$ und das Austasten bzw. Auslassen von Halb- oder Vollwellen des Stroms in der Sekundärspule 3-2 beliebig miteinander kombiniert werden. In den oben dargestellten Ausführungsformen bedeutet in dem Schaltmuster 11 für die Primärseite eine "1", dass eine Halbwelle der Spannung $U_1$ an die Übertragungseinrichtung übermittelt wird. Für die Sekundärseite bedeutet eine "1" in dem Schaltmuster 11, dass die entsprechende Halbwelle nicht an den Energiespeicher 2 übertragen wird. Diese Logik kann in weiteren Ausführungsformen abweichend ausgeführt sein. Beispielsweise kann eine High-aktive oder eine Low-aktive Logik ausgewählt werden. Ferner kann die Länge des Schaltmusters variieren. In einer Ausführungsform weist das Schaltmuster 100 Stellen auf. Dadurch kann die Leistung sehr einfach in Prozentschritten geregelt werden, wobei jede Stelle für ein Prozent steht. Andere Anzahlen von Stellen in dem Schaltmuster 11 sind ebenfalls möglich. Des weiteren wird in den oben dargestellten Ausführungsformen immer eine gesamte Vollwelle ("11" oder "00") geschaltet bzw. ausmaskiert. Eine ebenfalls erfindungsgemäße Ausführungsform sieht das Schalten bzw. Ausmaskieren von isolierten Halbwellen vor, z.B. "1001001100".

## Patentansprüche

1. Übertragungssystem (1) zum kontaktlosen Übertragen von Energie an einen Verbraucher (2), welcher in einem Fahrzeug (25) anordenbar ist, mit einer Übertragungseinrichtung (3), welche zumindest teilweise außerhalb des Fahrzeugs (25) anordenbar ist, zur kontaktlosen Übertragung elektrischer Energie,

mit einer Wechselrichtereinrichtung (4), welche außerhalb des Fahrzeugs (25) anordenbar ist, welche zwischen einer Energiequelle (6), welche eine Versorgungsleistung (7) bereitstellt, und der Übertragungseinrichtung (3) angeordnet ist und dazu ausgebildet ist, elektrische Energie aus der Energiequelle (6) an die Übertragungseinrichtung (3) zu übertragen;
mit einer Gleichrichtereinrichtung (5), welche zwischen der Übertragungseinrichtung (3) und dem Verbraucher (2) angeordnet ist und dazu ausgebildet ist, die elektrische Energie (8) von der Übertragungseinrichtung (3) an den Verbraucher (2) zu übertragen;
wobei die Wechselrichtereinrichtung (4) dazu ausgebildet ist, die Menge der übertragenen elektrischen Leistung durch eine Pulsmustermodulation der Steuersignale der Wechselrichtereinrichtung (4) einzustellen, wobei die Wechselrichtereinrichtung (4) dazu ausgebildet ist, eine Leistungsregelung durch Auslassen von Halb- oder Vollwellen in der Wechselrichtereinrichtung (4) gemäß Pulsen der Steuersignale der Wechselrichtereinrichtung (4) auszuführen, und wobei die Wechselrichtereinrichtung (4) so eingestellt ist, dass sich in Schwingungspausen ein Freilaufzustand ergibt, der ein Weiterschwingen eines Schwingkreises in der Wechselrichtereinrichtung (4) erlaubt, und wobei die Gleichrichtereinrichtung (5) dazu ausgebildet ist, die übertragene elektrische Leistung durch eine geeignete Pulsmustermodulation der Steuersignale der Gleichrichtereinrichtung (5) einzustellen, wobei die Gleichrichtereinrichtung (5) dazu ausgebildet ist, durch einen schaltbaren Freilaufzustandes in der Gleichrichtereinrichtung (5) eine oder mehrere Halb-oder Vollwellen gemäß Pulsen der Steuersignale der Gleichrichtereinrichtung (5) auszulassen, und wobei ein Arbeitspunkt des Übertragungssystems durch Kombination der Pulsmodulation der Leistung in der Wechselrichtereinrichtung (4) und der Gleichrichtereinrichtung (5) eingestellt wird.

2. Übertragungssystem nach Anspruch 1,
**dadurch gekennzeichnet dass** die Grundfrequenz oder ein ganzzahliges Vielfaches der Grundfrequenz der Pulsmustermodulation der Resonanzfrequenz der Übertragungseinrichtung entspricht.

3. Übertragungssystem nach Anspruch 1 oder 2,
**dadurch gekennzeichnet,**
**dass** die Pulsmustermodulation der Wechselrichtereinrichtung (4) und/oder der Gleichrichtereinrichtung (5) dazu ausgebildet ist, die Schaltvorgänge unter Ausnutzung eines Zero Voltage Switching, ZVS, und/oder Zero Current Switching, ZCS, Betriebsmodus durchzuführen.

4. Übertragungssystem nach einem der Ansprüche 1 bis 3,

mit einer Steuereinrichtung (10), welche mit der Wechselrichtereinrichtung (4) und der Gleichrichtereinrichtung (5) gekoppelt ist und für eine Vielzahl von Arbeitspunkten des Übertragungssystems (1) für die Wechselrichtereinrichtung (4) und/oder für die Gleichrichtereinrichtung (5) jeweils ein Schaltmuster (11) vorgegebener oder variabler Länge aufweist, wobei jede Stelle des Schaltmusters (11) eine Halbwelle oder eine Vollwelle der jeweiligen elektrischen Spannung oder des jeweiligen elektrischen Stroms kennzeichnet; und
wobei die Steuereinrichtung (10) ausgebildet ist, jeweils in Abhängigkeit eines der Schaltmuster (11) die Wechselrichtereinrichtung (4) und/oder die Gleichrichtereinrichtung (5) zu steuern.

5. Übertragungssystem nach Anspruch 4,
**dadurch gekennzeichnet,**
**dass** die Steuereinrichtung (10) dazu ausgebildet ist, das Schalten der Wechselrichtereinrichtung (4) und das Schalten der Gleichrichtereinrichtung (5) zu synchronisieren.

6. Übertragungssystem nach einem der vorherigen Ansprüche,
**dadurch gekennzeichnet,**

**dass** die Wechselrichtereinrichtung (4) eine Brückenschaltung aufweist; und/oder
**dass** die Gleichrichtereinrichtung (5) zwei negative Gleichrichterzweige (14-1 - 14-2) mit jeweils einem zweiten Schaltelement (17-1 - 17-2) mit einer zu dem jeweiligen zweiten Schaltelement antiparallel geschalteten zweiten Diode (18-1 - 18-2) und zwei positive Gleichrichterzweige (14-3 - 14-4) mit jeweils einer dritten Diode (19-1 - 19-2) aufweist, oder dass die Gleichrichtereinrichtung (5) als Wechselrichter ausgebildet ist, welche insbesondere der Wechselrichtereinrichtung (4) gleicht.

7. Verfahren zum kontaktlosen Übertragen von Energie an einen Energiespeicher (2), welcher in einem Fahrzeug (25) angeordnet ist, mit den Schritten:

zyklisches Schalten (S1) einer elektrischen Versorgungsleistung (7) einer Energiequelle (6), welche außerhalb des Fahrzeugs (25) angeordnet ist, an eine Übertragungseinrichtung (3), welche zur kontaktlosen Übertragung elektrischer Energie ausgebildet ist;
Kontaktloses Übertragen (S2) der elektrischen Energie von außerhalb des Fahrzeugs (25) in der Übertragungseinrichtung (3), welche zumindest teilweise außerhalb des Fahrzeugs (25) angeordnet ist;
zyklisches Schalten (S3) einer von der Übertragungseinrichtung (3) bereitgestellten elektrischen Leistung (8) an den Energiespeicher (2), welcher in einem Fahrzeug (25) angeordnet ist;
wobei in beiden Schritten des zyklischen Schaltens (S1, S3) die jeweilige Leistung durch Pulsmustermodulation geregelt wird,
wobei das zyklisches Schalten (S1) der elektrischen Versorgungsleistung (7) der Energiequelle (6) ein Auslassen von Halb- oder Vollwellen gemäß Pulsen eines ersten Steuersignales umfasst, und in Schwingungspausen ein Freilaufzustand eingestellt wird, der ein Weiterschwingen eines Schwingkreises erlaubt,
wobei das zyklisches Schalten (S3) der von der Übertragungseinrichtung (3) bereitgestellten elektrischen Leistung (8) ein Einstellen eines schaltbaren Freilaufzustands zum Auslassen einer oder mehrerer Halb- oder Vollwellen gemäß Pulsen eines zweiten Steuersignals umfasst, und
wobei ein Arbeitspunkt für das kontaktlose Übertragen der Energie durch Kombination der Pulsmodulation des ersten Steuersignals und des zweiten Steuersignals eingestellt wird.

8. Verfahren nach Anspruch 7,
   wobei die Schritte des zyklischen Schaltens oder die Schaltmuster synchronisiert werden.

9. Verfahren nach einem der Ansprüche 7 bis 8,

   wobei für eine Vielzahl von Arbeitspunkten des Verfahrens jeweils ein Schaltmuster (11) vorgegebener oder variabler Länge für das zyklisches Schalten einer elektrischen Versorgungsleistung (7) der Energiequelle (6), welche außerhalb des Fahrzeugs (25) angeordnet ist und/oder das zyklische Schalten der von der Übertragungseinrichtung (3), welche zumindest teilweise außerhalb des Fahrzeugs (25) angeordnet ist, bereitgestellten elektrischen Leistung (8) vorgegeben werden, wobei jede Stelle des Schaltmusters (11) eine Halbwelle oder eine Vollwelle der jeweiligen elektrischen Spannung oder des jeweiligen Stroms der jeweiligen Leistung kennzeichnet; und
   wobei jeweils in Abhängigkeit eines der Schaltmuster (11) die elektrische Versorgungsleistung (7) der Energiequelle (6) zyklisch geschaltet wird und/oder die von der Übertragungseinrichtung (3) bereitgestellte Leistung (8) zyklisch geschaltet wird.

10. Fahrzeuganordnung (20),

    mit einem Übertragungssystem (1) nach einem der Ansprüche 1 bis 6;
    mit einem Fahrzeug (25);
    wobei die Gleichrichtereinrichtung (5) in dem Fahrzeug (25) angeordnet ist; und
    wobei die Wechselrichtereinrichtung (4) außerhalb des Fahrzeugs (25) angeordnet ist; und
    wobei die Übertragungseinrichtung (3) zumindest teilweise in dem Fahrzeug (25) und teilweise außerhalb des Fahrzeugs (25) angeordnet ist.

**Claims**

1. Transmission system (1) for the contactless transmission of energy to a consumer (2) which can be arranged in a vehicle (25), including a transmission device (3), which can be arranged at least partially outside the vehicle (25), for the contactless transmission of electrical energy,

   including an inverter device (4) which can be arranged outside the vehicle (25), is arranged between an energy source (6), which provides a supply power (7), and the transmission device (3), and is designed to transmit electrical energy from the energy source (6) to the transmission device (3);
   including a rectifier device (5) which is arranged between the transmission device (3) and the consumer (2) and is designed to transmit the electrical energy (8) from the transmission device (3) to the consumer (2);
   wherein the inverter device (4) is designed to set the quantity of transmitted electrical power via a pulse pattern modulation of the control signals of the inverter device (4), wherein the inverter device (4) is designed to execute power regulation by omitting half waves or full waves in the inverter device (4) in accordance with pulses of the control signals of the inverter device (4), and wherein the inverter device (4) is set in such a way that, during oscillation breaks, a freewheeling state results which allows a continued oscillation of an oscillating circuit in the inverter device (4), and
   wherein the rectifier device (5) is designed to set the transmitted electrical power via a suitable pulse pattern modulation of the control signals of the rectifier device (5), wherein the rectifier device (5) is designed to omit one or more half waves or full waves in accordance with pulses of the control signals of the rectifier device (5) by way of a switchable freewheeling state in the rectifier device (5), and
   wherein an operating point of the transmission system is set via a combination of the pulse modulation of the power in the inverter device (4) and the rectifier device (5).

2. Transmission system according to Claim 1, **characterized in that** the fundamental frequency or an integer multiple of the fundamental frequency corresponds to the pulse pattern modulation of the resonant frequency of the transmission device.

3. Transmission system according to Claim 1 or 2, **characterized in that** the pulse pattern modulation of the inverter device (4) and/or the rectifier device (5) is designed to carry out the switching operations using a zero-voltage switching (ZVS) and/or zero-current switching (ZCS) operating mode.

4. Transmission system according to one of Claims 1 to 3,

   including a control device (10) which is coupled to the inverter device (4) and the rectifier device (5) and has a respective switching pattern (11) having a predefined or variable length for the inverter device (4) and/or for the rectifier device (5), for a plurality of operating points of the transmission system (1), wherein each position of the switching pattern (11) indicates a half wave or a full wave of the particular voltage or the particular electric current; and

wherein the control device (10) is designed to control the inverter device (4) and/or the rectifier device (5) as a function of one of the switching patterns (11).

5. Transmission system according to Claim 4, **characterized**

**in that** the control device (10) is designed to synchronize the switching of the inverter device (4) and the switching of the rectifier device (5).

6. Transmission system according to one of the preceding claims, **characterized**

**in that** the inverter device (4) includes a bridge circuit; and/or
**in that** the rectifier device (5) has two negative rectifier branches (14-1 - 14-2), each including a second switching element (17-1 - 17-2) including a second diode (18-1 - 18-2) which is reverse-connected in parallel with the respective second switching element, and two positive rectifier branches (14-3 - 14-4), each including a third diode (19-1 - 19-2), or in that the rectifier device (5) is designed as an inverter which is in particular identical to the inverter device (4).

7. Method for the contactless transmission of energy to an energy store (2) which is arranged in a vehicle (25), including the steps of:

cyclically switching (S1) an electrical supply power (7) of an energy source (6) which is arranged outside the vehicle (25) to a transmission device (3) which is designed for the contactless transmission of electrical energy;
contactlessly transmitting (S2) the electrical energy from outside the vehicle (25) in the transmission device (3) which is arranged at least partially outside the vehicle (25);
cyclically switching (S3) an electrical power (8) provided by the transmission device (3) to the energy store (2) which is arranged in a vehicle (25);
wherein, in both steps of cyclically switching (S1, S3), the respective power is regulated via pulse pattern modulation,
wherein cyclically switching (S1) the electrical supply power (7) of the energy source (6) comprises omitting half waves or full waves in accordance with pulses of a first control signal, and, during oscillation breaks, a freewheeling state is set which allows a continued oscillation of an oscillating circuit,
wherein cyclically switching (S3) the electrical power (8) provided by the transmission device (3) comprises setting a switchable freewheeling state for omitting one or more half waves or full waves in accordance with pulses of a second control signal, and
wherein an operating point for the contactless transmission of the energy is set via a combination of the pulse modulation of the first control signal and of the second control signal.

8. Method according to Claim 7,
wherein the steps of cyclically switching, or the switching patterns, are synchronized.

9. Method according to either of Claims 7 and 8,

wherein, for a plurality of operating points of the method, a switching pattern (11) having a predefined or variable length is predefined in each case for cyclically switching an electrical supply power (7) of the energy source (6), which is arranged outside the vehicle (25), and/or cyclically switching the electrical power (8) provided by the transmission device (3) which is arranged at least partially outside the vehicle (25), wherein each position of the switching pattern (11) indicates a half wave or a full wave of the particular voltage or the particular current of the particular power; and
wherein the electrical supply power (7) of the energy source (6) is cyclically switched, and/or the power (8) provided by the transmission device (3) is cyclically switched, as a function of one of the switching patterns (11) in each case.

10. Vehicle assembly (20),

including a transmission system (1) according to one of Claims 1 to 6;
including a vehicle (25);
wherein the rectifier device (5) is arranged in the vehicle (25); and
wherein the inverter device (4) is arranged outside the vehicle (25); and
wherein the transmission device (3) is arranged at least partially in the vehicle (25) and partially outside the vehicle (25).

**Revendications**

1. Système de transfert (1) pour le transfert sans contact d'énergie à un consommateur (2) qui peut être disposé dans un véhicule (25), comprenant

un dispositif de transfert (3) qui peut être disposé au moins partiellement à l'extérieur du véhicule (25) pour le transfert sans contact d'énergie électrique,

un dispositif onduleur (4) qui peut être disposé à l'extérieur du véhicule (25), qui est disposé entre une source d'énergie (6) qui fournit une puissance d'alimentation (7) et le dispositif de transfert (3), et qui est réalisé pour transférer de l'énergie électrique de la source d'énergie (6) au dispositif de transfert (3) ;

un dispositif redresseur (5) qui est disposé entre le dispositif de transfert (3) et le consommateur (2) et est réalisé pour transférer l'énergie électrique (8) du dispositif de transfert (3) au consommateur (2) ;

dans lequel le dispositif onduleur (4) est réalisé pour régler la quantité de la puissance électrique transférée par une modulation de modèle d'impulsion des signaux de commande du dispositif onduleur (4), le dispositif onduleur (4) étant réalisé pour effectuer une régulation de puissance en omettant des demi-ondes ou des ondes pleines dans le dispositif onduleur (4) selon des impulsions des signaux de commande du dispositif onduleur (4), et le dispositif onduleur (4) étant réglé de telle sorte qu'un état de marche à vide se produit dans les pauses d'oscillation qui permet l'oscillation continue d'un circuit oscillant dans le dispositif onduleur (4), et

dans lequel le dispositif redresseur (5) est réalisé pour régler la puissance électrique transférée par une modulation de modèle d'impulsion adaptée des signaux de commande du dispositif redresseur (5), le dispositif redresseur (5) étant réalisé pour omettre par un état de marche à vide commutable dans le dispositif redresseur (5) une ou plusieurs demi-ondes ou ondes pleines selon les impulsions des signaux de commande du dispositif redresseur (5), et

dans lequel un point de fonctionnement dynamique du système de transfert est réglé par une combinaison de la modulation d'impulsions de la puissance dans le dispositif onduleur (4) et le dispositif redresseur (5).

2. Système de transfert selon la revendication 1, **caractérisé en ce que** la fréquence fondamentale ou un multiple entier de la fréquence fondamentale de la modulation de modèle d'impulsion correspond à la fréquence de résonance du dispositif de transfert.

3. Système de transfert selon la revendication 1 ou 2, **caractérisé en ce que** la modulation de modèle d'impulsion du dispositif onduleur (4) et/ou du dispositif redresseur (5) est réalisé pour effectuer les processus de commutation en exploitant un mode de fonctionnement de type commutation par tension nulle, ZVS, et/ou commutation par courant nul, ZCS.

4. Système de transfert selon l'une quelconque des revendications 1 à 3, comprenant un dispositif de commande (10) qui est couplé au dispositif onduleur (4) et au dispositif redresseur (5) et présente pour une pluralité de points de fonctionnement dynamiques du système de transfert (1) pour le dispositif onduleur (4) et/ou pour le dispositif redresseur (5) respectivement un modèle de commutation (11) de longueur prédéfinie ou variable, chaque point du modèle de commutation (11) identifiant une demi-onde ou une onde pleine de la tension électrique respective ou du courant électrique respectif ; et

dans lequel le dispositif de commande (10) est réalisé pour commander respectivement en fonction d'un des modèles de commutation (11) le dispositif onduleur (4) et/ou le dispositif redresseur (5).

5. Système de transfert selon la revendication 4, **caractérisé en ce que** le dispositif de commande (10) est réalisé pour synchroniser la commutation du dispositif onduleur (4) et la commutation du dispositif redresseur (5).

6. Système de transfert selon l'une quelconque des revendications précédentes, **caractérisé**

**en ce que** le dispositif onduleur (4) présente un circuit en pont ; et/ou
**en ce que** le dispositif redresseur (5) présente deux branches de redresseur négatives (14-1 - 14-2) pourvues respectivement d'un deuxième élément de commutation (17-1 - 17-2) comprenant une deuxième diode (18-1 - 18-2) montée tête-bêche par rapport au deuxième élément de commutation respectif, et deux branches de redresseur positives (14-3 - 14-4) pourvues respectivement d'une troisième diode (19-1 - 19-2), ou en ce que le dispositif redresseur (5) est réalisé sous la forme d'un onduleur qui est en particulier similaire au dispositif onduleur (4).

7. Procédé de transfert sans contact d'énergie à un accumulateur d'énergie (2) qui est disposé dans un véhicule (25), comprenant les étapes consistant à :

commuter (S1) de manière cyclique une puissance d'alimentation électrique (7) d'une source d'énergie (6) qui est disposée à l'extérieur du véhicule (25) sur un dispositif de transfert (3) qui est réalisé pour le transfert sans contact d'énergie électrique ;

transférer (S2) sans contact l'énergie électrique de l'extérieur du véhicule (25) dans le dispositif de transfert (3) qui est disposé au moins partiellement à l'extérieur du véhicule (25) ;

commuter (S3) de manière cyclique une puissance électrique (8) fournie par le dispositif de transfert (3) sur l'accumulateur d'énergie (2) qui est disposé dans un véhicule (25) ;

dans lequel, dans les deux étapes de commutation cyclique (S1, S3), la puissance respective est régulée par modulation de modèle d'impulsion,

dans lequel la commutation cyclique (S1) de la puissance d'alimentation électrique (7) de la source d'énergie (6) comprend une omission de demi-ondes ou d'ondes pleines selon les impulsions d'un premier signal de commande, et dans des pauses d'oscillation, un état de marche à vide est réglé qui permet une oscillation continue d'un circuit oscillant,

dans lequel la commutation cyclique (S3) de la puissance électrique (8) fournie par le dispositif de transfert (3) comprend un réglage d'un état de marche à vide commutable pour omettre une ou plusieurs demi-ondes ou ondes pleines selon les impulsions d'un deuxième signal de commande, et

dans lequel un point de fonctionnement dynamique pour le transfert sans contact de l'énergie est réglé en combinant la modulation d'impulsions du premier signal de commande et du deuxième signal de commande.

8. Procédé selon la revendication 7, dans lequel les étapes de la commutation cyclique ou les modèles de commutation sont synchronisés.

9. Procédé selon l'une quelconque des revendications 7 à 8,

dans lequel pour une pluralité de points de fonctionnement dynamiques du procédé, respectivement un modèle de commutation (11) de longueur prédéfinie ou variable est prédéfini pour la commutation cyclique d'une puissance d'alimentation électrique (7) de la source d'énergie (6) qui est disposée à l'extérieur du véhicule (25), et/ou pour la commutation cyclique de la puissance électrique (8) fournie par le dispositif de transfert (3) qui est disposé au moins partiellement à l'extérieur du véhicule (25), chaque point du modèle de commutation (11) identifiant une demi-onde ou une onde pleine de la tension électrique respective ou du courant respectif de la puissance respective ; et

dans lequel respectivement en fonction d'un des modèles de commutation (11), la puissance d'alimentation électrique (7) de la source d'énergie (6) est commutée de manière cyclique, et/ou la puissance (8) fournie par le dispositif de transfert (3) est commutée de manière cyclique.

10. Ensemble de véhicule (20), comprenant

un système de transfert (1) selon l'une quelconque des revendications 1 à 6 ;

un véhicule (25) ;

dans lequel le dispositif redresseur (5) est disposé dans le véhicule (25) ; et

dans lequel le dispositif onduleur (4) est disposé à l'extérieur du véhicule (25) ; et

dans lequel le dispositif de transfert (3) est disposé au moins partiellement dans le véhicule (25) et partiellement à l'extérieur du véhicule (25).

**Fig. 1**

**Fig. 2**

Fig. 3

Fig. 4

17

Fig. 5

Fig. 6

Fig. 7

EP 3 134 952 B1

Fig. 8

Fig. 9

Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2623363 A
- EP 2479059 A1
- US 6301128 B1

- WO 2010115867 A1
- US 20110254377 A1
- EP 2632762 A1